# EUROPEAN PATENT APPLICATION

(11) **EP 4 679 547 A1**
(43) Date of publication of application: **14.01.2026**
(21) Application number: 25178097.9
(22) Date of filing: 22.05.2025
(51) Int. Cl.: H01M 10/04, H01M 10/0525, H01M 50/474, H01M 50/477, H01M 50/48, H01M 50/529, H01M 50/533, H01M 50/538, H01M 50/593

(54) **SECONDARY BATTERY**

(30) Priority: 08.07.2024 KR 20240089407
(71) Applicant: SAMSUNG SDI CO., LTD., Yongin-si, Gyeonggi-do 17084 (KR)
(72) Inventor: KO, Dong Hyuk, 17084 Yongin-si, Gyeonggi-do (KR); LEE, Jeong Yeon, 17084 Yongin-si, Gyeonggi-do (KR)
(74) Representative: Gulde & Partner

(57) **Abstract**

A secondary battery includes a case; and an electrode assembly and a conductive plate accommodated in the case, the electrode assembly includes a first electrode assembly part and a second electrode assembly part, a partition wall is between the first electrode assembly part and the second electrode assembly part, the conductive plate includes a first conductive plate on the electrode assembly and a second conductive plate under the electrode assembly, the first conductive plate includes a first conductive part and a second conductive part that are insulated by an insulating member, the first conductive part is electrically connected to the first electrode assembly part, the second conductive part is electrically connected to the second electrode assembly part, and the second conductive plate is electrically connected to the first electrode assembly part and the second electrode assembly part.

## Description

### BACKGROUND

### 1. Field

Embodiments relate to a secondary battery.

### 2. Description of the Related Art

Unlike primary batteries that are not designed to be recharged, secondary (or rechargeable) batteries are batteries that are designed to be discharged and recharged. Low-capacity secondary batteries are used in portable, small electronic devices, such as smart phones, feature phones, notebook computers, digital cameras, and camcorders, whereas large-capacity secondary batteries are widely used as power sources for driving motors in hybrid vehicles and electric vehicles and for storing power (e.g., home and/or utility scale power storage). A secondary battery generally includes an electrode assembly including a positive electrode and a negative electrode, a case accommodating the positive and negative electrodes, and electrode terminals connected to the electrode assembly.

The information disclosed in this section is provided only for enhancement of understanding of the background of the disclosure and therefore it may contain information that does not form the prior art.

### SUMMARY

Embodiments provide a secondary battery capable of achieving a high voltage.

According to an aspect of the present disclosure, a secondary battery comprises a case; and an electrode assembly, a partition wall, and a conductive plate accommodated in the case, the electrode assembly includes a first electrode assembly part and a second electrode assembly part, a partition wall is between the first electrode assembly part and the second electrode assembly part, the conductive plate includes a first conductive plate on the electrode assembly and a second conductive plate under the electrode assembly, the first conductive plate comprises a first conductive part and a second conductive part that are insulated by an insulating member, the first conductive part is electrically connected to the first electrode assembly part, the second conductive part is electrically connected to the second electrode assembly part, and the second conductive plate is electrically connected to the first electrode assembly part and the second electrode assembly part.

In embodiments of secondary battery according to the disclosure, the first electrode assembly part may include a 1-1 electrode(positive electrode), a 2-1 electrode(negative electrode), and a first separator, the second electrode assembly part may include a 1-2 electrode(positive electrode), a 2-2 electrode(negative electrode), and a second separator, the 1-1 electrode may include a 1-1 uncoated portion(uncoated portion of the positive electrode) where an active material layer is not provided, the 2-1 electrode may include a 2-1 uncoated portion(uncoated portion of the negative electrode) where an active material layer is not provided, the 1-2 electrode may include a 1-2 uncoated portion(uncoated portion of the positive electrode) where an active material layer is not provided, the 2-2 electrode may include a 2-2 uncoated portion(uncoated portion of the negative electrode) where an active material layer is not provided, the 1-1 electrode and the 1-2 electrode may each be positive electrodes, and the 2-1 electrode and the 2-2 electrode may each be negative electrodes.

In embodiments, the 1-1 uncoated portion may be at an upper end of the first electrode assembly part, the 2-1 uncoated portion may be at a lower end of the first electrode assembly part, the 1-2 uncoated portion may be a lower end of the second electrode assembly part, and the 2-2 uncoated portion may be at an upper end of the second electrode assembly part.

In embodiments, the 1-1 uncoated portion and the 2-2 uncoated portion may be electrically connected to the first conductive plate, and the 2-1 uncoated portion and the 1-2 uncoated portion may be electrically connected to the second conductive plate.

In embodiments, the partition wall may comprise a different material from the first separator and the second separator.

In embodiments, a thickness of the partition wall may be in a range from approximately 20 µm to approximately 100 µm.

In embodiments, the first electrode assembly part and the second electrode assembly part may be connected in series.

In embodiments, the first electrode assembly part may be configured to have a first voltage, the second electrode assembly part may be configured to have a second voltage. The first voltage and the second voltage may be the same or different.

In embodiments, the electrode assembly may be configured to have a voltage corresponding to or being equal to a sum of the first voltage and the second voltage.

In embodiments, the partition wall may comprise a resin, and the movement of lithium ions may be blocked by the partition wall.

In embodiments, the partition wall may comprise a first region and a second region, the first region may be between the first electrode assembly part and the second electrode assembly part, and the second region may be on a portion of at least one of the 1-1 uncoated portion and the 2-1 uncoated portion.

In embodiments, the secondary battery may further comprise a first blocking member disposed between the partition wall and the insulating member; and a second blocking member between the partition wall and the second conductive plate.

In embodiments, the secondary battery may further comprise a blocking member between the partition wall and the second conductive plate, the insulating member may comprise a first region and a second region, the first region may be in a hole of the first conductive plate, and the second region may be between the first region and the partition wall.

In embodiments, the electrode assembly may further comprise a third electrode assembly part, the second electrode assembly part may be between the first electrode assembly part and the third electrode assembly part, the third electrode assembly part may comprise a 1-3 electrode, a 2-3 electrode, and a third separator, the 1-3 electrode may comprise a 1-3 uncoated portion where an active material layer is not provided, the 2-3 electrode comprises a 2-3 uncoated portion where an active material layer is not provided, the 1-3 electrode may be a positive electrode, the 2-3 electrode may be a negative electrode, the 1-3 uncoated portion may be on the third electrode assembly part, the 2-3 uncoated portion may be under the third electrode assembly part, the 1-3 uncoated portion may be electrically connected to the first conductive plate, and the 2-3 uncoated portion may be electrically connected to the second conductive plate.

In embodiments, the partition wall may comprise a first partition wall between the first electrode assembly part and the second electrode assembly part, and a second partition wall between the second electrode assembly part and the third electrode assembly part.

In embodiments, the widths of the first partition wall and the second partition wall may be different

In embodiments, the first electrode assembly part may be configured to have a first voltage, the second electrode assembly part may be configured to have a second voltage, and the third electrode assembly may be configured to have a third voltage. The first voltage, the second voltage, and the third voltage may be the same or different. In embodiments, any two of the first voltage, the second voltage, and the third voltage may be equal to each other. In embodiments, any two of the first voltage, the second voltage, and the third voltage may be different from each other.

In embodiments, the electrode assembly may be configured to have a voltage corresponding to or being equal to a sum of the first voltage, the second voltage, and the third voltage.

Throughout the present disclosure, the expression "configured to have a first voltage" may be understood as "configured to be at a first voltage level", the expression "configured to have a second voltage" may be understood as "configured to be at a second voltage level", and the expression "configured to have a third voltage" may be understood as "configured to be at a third voltage level". Further, the expression "configured to have a voltage" may be understood as "configured to be at a voltage level."

### BRIEF DESCRIPTION OF THE DRAWINGS

The accompanying drawings illustrate preferred embodiments and serve to further illustrate the technical ideas of the disclosure in conjunction with the detailed description of exemplary embodiments that follows, and the disclosure is not to be construed as limited to what is shown in such drawings. In the drawings:
FIG. 1 is a perspective view showing a secondary battery according to a first embodiment.
FIG. 2 is a top view showing an electrode assembly according to the first embodiment.
FIG. 3 is a sectional view taken along the B-B' section of FIG. 2.
FIGS. 4 to 7 are views showing the electrode assembly and a conductive plate coupled according to the first embodiment.
FIG. 8 is a sectional view taken along the A-A' section of FIG. 1.
FIG. 9 is a top view showing an electrode assembly according to a second embodiment.
FIG. 10 is a sectional view taken along the C-C' section of FIG. 9.
FIGS. 11 to 13 are views showing the electrode assembly and a conductive plate coupled according to the second embodiment
FIG. 14 is a perspective view showing a battery module including secondary batteries according to some embodiments.
FIGS. 15 and 16 are perspective views showing a battery pack including battery modules according to some embodiments.
FIGS. 17 and 18 are perspective views and a side view showing a vehicle including battery packs according to some embodiments.

### DETAILED DESCRIPTION

Embodiments are provided to more fully illustrate the disclosure to a person having ordinary skill in the art, the following embodiments may be modified in various other forms, and the scope of the disclosure is not limited to the following embodiments. The embodiments are provided to make the disclosure more faithful and complete and to completely convey the idea of the disclosure fully to those skilled in the art.

In the following drawings, the thickness or size of each layer is exaggerated for convenience and clarity of description and the same reference symbols in the drawings refer to the same elements. As used herein, the term "and/or" may include any one of the enumerated items and any combination of one or more thereof. As used herein, the term "connected" refers not only to direct connection between members A and B but also to indirect connection between members A and B with member C interposed therebetween.

The terms used in the specification are intended to describe specific embodiments and are not intended to limit the disclosure. As used herein, singular forms may include plural forms, unless the context clearly indicates otherwise. As used herein, the terms "comprise" (or "include") and/or "comprising" (or "including") are intended to specify the presence of stated figures, numbers, steps, operations, members, elements, and/or groups thereof and do not exclude the presence or addition of one or more other figures, numbers, steps, operations, members, elements, and/or groups.

While terms such as first and second are used herein to describe various members, parts, regions, layers, and/or portions, the members, the parts, the regions, the layers, and/or the portions are not to be limited by the terms. The terms are used only to distinguish one member, one part, one region, one layer, or one portion from another member, another part, another region, another layer, or another portion. Thus, a first member, a first part, a first region, a first layer, or a first portion hereinafter described may refer to a second member, a second part, a second region, a second layer, or a second portion without departing from the teachings of the disclosure.

Terms related to space, such as "beneath," "below," "lower," "above," and "upper," may be utilized to facilitate understanding of one element or feature shown in the drawings as different from another element or feature. The terms related to space are intended to facilitate understanding of the disclosure in various states of process or use and are not intended to limit the disclosure. For example, if an element or feature in a figure is inverted, an element or feature described as "beneath" or "below" becomes "above" or "upper." Thus, "beneath" is a concept that encompasses "above" or "below".

Hereinafter, a secondary battery according to an embodiment will be described with reference to the drawings.

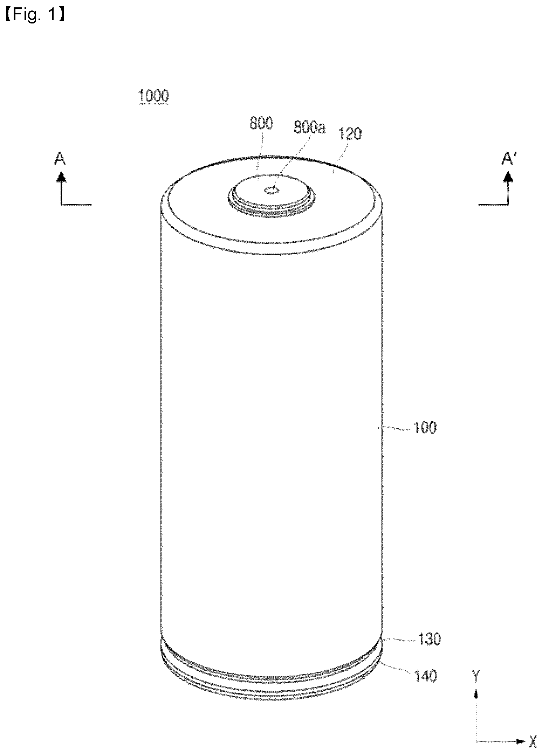

Referring to FIGS. 1 to 8, a secondary battery 1000 according to a first embodiment may include a case 100 and an electrode assembly 200.

The case 100 may form the overall appearance of the secondary battery 1000. The case 100 may include a conductive metal such as aluminum, an aluminum alloy, or nickel-plated steel. The case 100 may provide a space in which the electrode assembly 200 is accommodated. For example, the case 100 may include an accommodating portion, and the electrode assembly 200 may be accommodated inside the accommodating portion.

The case 100 may be formed in various shapes. For example, the case 100 may be formed in a circular, prismatic, or pouch shape. However, the embodiment is not limited thereto. Hereinafter, for convenience of explanation, the case 100 will be described as being formed in a circular shape.

The electrode assembly 200 may be accommodated inside the case 100.

The electrode assembly 200 may include a plurality of electrode assembly parts. For example, the electrode assembly 200 may include at least two electrode assembly portions. For example, the electrode assembly 200 may include a first electrode assembly part 210 and a second electrode assembly part 220. The first electrode assembly part 210 and the second electrode assembly part 220 may be concentric or substantially concentric.

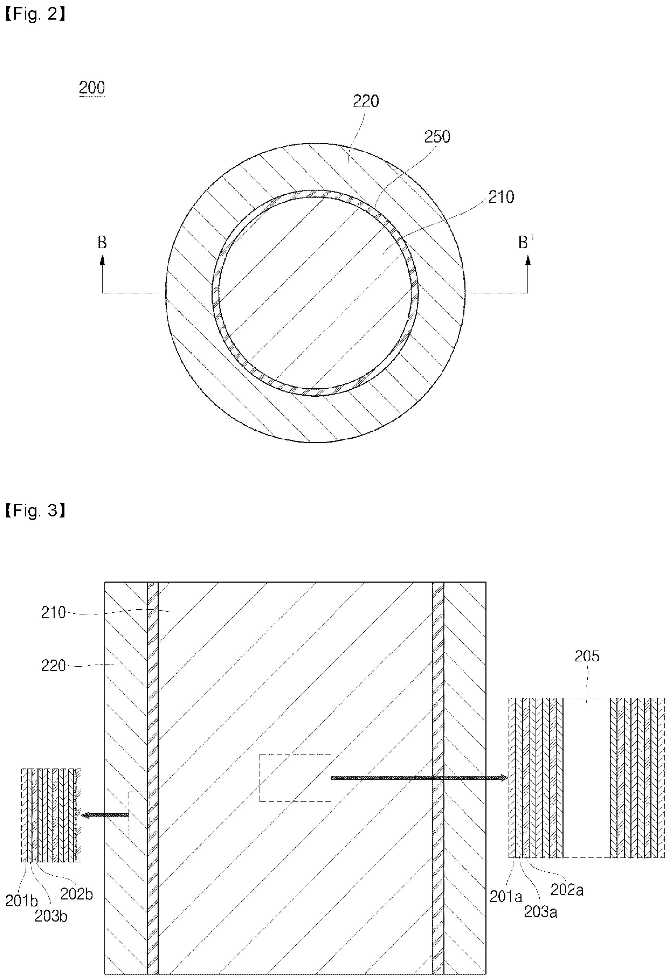

Referring to FIGS. 2 to 4, the first electrode assembly part 210 may include a 1-1 electrode 201a, a 2-1 electrode 202a, and a first separator 203a.

The first electrode assembly part 210 may be wound in a jelly-roll shape. The first electrode assembly part 210 may be wound in a state where the first separator 203a is between the 1-1 electrode 201a and the 2-1 electrode 202a.

In one or more embodiments, the first electrode assembly part 210 may include a hollow portion 205. The hollow portion 205 may be formed at the center (or substantially the center) of the winding axis of the first electrode assembly part 210.

The second electrode assembly part 220 may include a 1-2 electrode 201b, a 2-2 electrode 202b, and a second separator 203b.

The second electrode assembly part 220 may be wound in a jelly-roll shape. The second electrode assembly part 220 may be wound in a state where the second separator 203b is between the 1-2 electrode 201b and the 2-2 electrode 202b. The second electrode assembly part 220 may be wound around the first electrode assembly part 210 and about an axis of the first electrode assembly part 210. In one or more embodiments, the second electrode assembly part 220 does not include a separate hollow portion.

The 1-1 electrode 201a may include a 1-1 base material (base material of the positive electrode) and a 1-1 active material layer (active material of the positive electrode). The 1-1 active material layer may be on the 1-1 base material. For example, the 1-1 active material layer may be on one surface and the other surface (i.e., the opposite surface) of the 1-1 base material.

The 1-2 electrode 201b may include a 1-2 base material (base material of the positive electrode) and a 1-2 active material layer (active material of the positive electrode). The 1-2 active material layer may be on the 1-2 base material. For example, the 1-2 active material layer may be on one surface and the other surface (i.e., the opposite surface) of the 1-2 base material.

The 1-1 base material may include an 1-1 uncoated portion 211a. The 1-1 active material layer is not on the 1-1 uncoated portion 211a. That is, the 1-1 uncoated portion 211a may be defined as an area where the 1-1 active material layer is not provided. The 1-1 uncoated portion 211a may be on the upper portion of the first electrode assembly part 210. In one or more embodiments, the 1-1 uncoated portion 211a may be on the lower portion of a first conductive plate 310.

The 1-2 base material may include an 1-2 uncoated portion 221a. The 1-2 active material layer is not provided on the 1-2 uncoated portion 221a. That is, the 1-2 uncoated portion 221a may be defined as an area where the 1-2 active material layer is not provided. The 1-2 uncoated portion 221a may be provided on the lower portion of the second electrode assembly part 220. In one or more embodiments, the 1-2 uncoated portion 221a may be on the upper portion of a second conductive plate 320.

The 1-1 electrode 201a and the 1-2 electrode 201b may be positive electrode. In one or more embodiments, the 1-1 electrode 201a may be the positive electrode of the first electrode assembly part 210, and the 1-2 electrode 201b may be the positive electrode of the second electrode assembly part 220.

The 1-1 electrode 201a and the 1-2 electrode 201b may include the same material. For example, the 1-1 base material and the 1-2 base material may include aluminum. In one or more embodiments, the 1-1 active material layer and the 1-2 active material layer may include a transition metal oxide.

The 2-1 electrode 202a may include a 2-1 base material (base material of the negative electrode) and a 2-1 active material layer (active material of the negative electrode). The 2-1 active material layer may be on the 2-1 base material. For example, the 2-1 active material layer may be on one surface and the other surface (i.e., the opposite surface) of the 2-1 base material.

The 2-2 electrode 202b may include a 2-2 base material (base material of the negative electrode) and a 2-2 active material layer (active material of the negative electrode). The 2-2 active material layer may be on the 2-2 base material. For example, the 2-2 active material layer may be on one surface and the other surface (i.e., the opposite surface) of the 2-2 base material.

The 2-1 base material may include a 2-1 uncoated portion 211b. The 2-1 active material layer is not provided on the 2-1 uncoated portion 211b. That is, the 2-1 uncoated portion 211b may be defined as an area where the 2-1 active material layer is not provided. The 2-1 uncoated portion 211b may be provided on the lower portion of the first electrode assembly part 210, and the 2-1 uncoated portion 211b may be provided on the upper portion of the second conductive plate 320.

The 2-2 base material may include a 2-2 uncoated portion 221b. The 2-2 active material layer is not provided on the 2-2 uncoated portion 221b. That is, the 2-2 uncoated portion 221b may be defined as an area where the 2-2 active material layer is not provided. The 2-2 uncoated portion 221b may be provided on the upper portion of the second electrode assembly part 220. In one or more embodiments, the 2-2 uncoated portion 221b may be provided on the lower portion of the first conductive plate 310.

The 2-1 electrode 202a and the 2-2 electrode 202b may be negative electrodes. In one or more embodiments, the 2-1 electrode 202a may be the negative electrode of the first electrode assembly part 210, and the 2-2 electrode 202b may be the negative electrode of the second electrode assembly 220.

The 2-1 electrode 202a and the 2-2 electrode 202b may include the same material. For example, the 2-1 base material and the 2-2 base material may include copper or nickel, and the 2-1 active material layer and the 2-2 active material layer may include graphite.

The first separator 203a may be between the 1-1 electrode 201a and the 2-1 electrode 202a. The second separator 203b may be between the 1-2 electrode 201b and the 2-2 electrode 202b.

The first separator 203a may be configured to prevent a short circuit between the 1-1 electrode 201a and the 2-1 electrode 202a while allowing the movement of lithium ions. The second separator 203b may be configured to prevent a short circuit between the 1-2 electrode 201b and the 2-2 electrode 202b while allowing the movement of lithium ions.

The first separator 203a and the second separator 203b may include the same material. For example, the first separator 203a and the second separator 203b may include a polyethylene film, a polypropylene film, or a polyethylene-polypropylene film.

The secondary battery may include a partition wall 250. The partition wall 250 may be between the first electrode assembly part 210 and the second electrode assembly part 220. The first electrode assembly part 210 and the second electrode assembly part 220 may be separated by the partition wall 250. In one or more embodiments, the first electrode assembly part 210 and the second electrode assembly part 220 do not contact each other due to the partition wall 250.

The partition wall 250 may be located (e.g., inserted into the case 100) after the first electrode assembly part 210 is formed. In one or more embodiments, the partition wall 250 may be located (e.g., inserted into the case 100) before the second electrode assembly part 220 is formed.

The 1-1 electrode 201a, the 2-1 electrode 202a, and the first separator 203a may be wound to form the first electrode assembly part 210. In one or more embodiments, the 1-1 electrode 201a, the 2-1 electrode 202a, and the first separator 203a are wound with the winding core as the axis. In this manner, the first electrode assembly part 210 with a hollow portion 205 formed at the winding center may be formed.

Next, the partition wall 250 is provided on the outer surface of the first electrode assembly part 210. The partition wall 250 may cover the entire (or substantially the entire) or partial outer surface of the first electrode assembly part 210.

Next, the second electrode assembly part 220 is formed. For example, the 2-2 electrode 201b, the 2-2 electrode 202b, and the second separator 203b are wound to form the second electrode assembly part 220. In one or more embodiments, the 1-2 electrode 201b, the 2-2 electrode 202b, and the second separator 203b are wound with the winding core and the first electrode assembly part 210 as an axis. In this manner, the second electrode assembly part 220 in contact with the partition wall 250 may be formed.

The partition wall 250 is between the first electrode assembly part 210 and the second electrode assembly part 220. Therefore, ion exchange between the first electrode assembly part 210 and the second electrode assembly part 220 may be blocked by the partition wall 250. The shape of the secondary battery 1000 may be maintained by the partition wall 250. In one or more embodiments, the partition wall 250 may fix the shapes of the first electrode assembly part 210 and the second electrode assembly part 220. Accordingly, the secondary battery 1000 may be prevented or reduced (mitigated) from collapsing at the center of the assembly (e.g., at the winding axis).

In addition, the shape of the first electrode assembly part 210 may be maintained by the partition wall 250. In one or more embodiments, when the first electrode assembly part 210 swells due to overcharging, the deformation of the first electrode assembly part 210 may be prevented or reduced (mitigated) by the partition wall 250.

The partition wall 250 may include a different material from the first separator 203a and the second separator 203b. In one or more embodiments, the partition wall 250 may include a material that does not allow the movement of lithium ions. In one or more embodiments, the partition wall 250 may include a resin. In one or more embodiments, the partition wall 250 may include polyethylene terephthalate (PET), polyimide (PI), or PTFE (Polytetrafluoroethylene).

Therefore, the first electrode assembly part 210 and the second electrode assembly part 220 do not exchange ions due to the partition wall 250. Therefore, the first electrode assembly part 210 and the second electrode assembly part 220 may be electrically separated while each having an individual (separate) voltage.

The partition wall 250 may have a set thickness. For example, the thickness of the partition wall 250 may be greater than the thickness of the 1-1 base material, the 1-2 base material, the 2-1 base material, and the 2-2 base material. For example, the thickness of the partition wall 250 may be in a range from approximately 20 *µ*m to approximately 100 *µ*m, in a range from approximately 40 *µ*m to approximately 80 *µ*m, or in a range from approximately 50 *µ*m to approximately 70 *µ*m. The thickness of the partition wall 250 may vary depending on the material forming the partition wall 250. In one or more embodiments, the thickness of the partition wall 250 may vary depending on the number of turns of the partition wall 250.

If the thickness of the partition wall 250 is less than 20 *µ*m, the strength of the partition wall 250 may decrease. Therefore, the partition wall 250 may be damaged. Accordingly, ion exchange may occur between the first electrode assembly part 210 and the second electrode assembly part 220. If the thickness of the partition wall 250 exceeds 100 *µ*m, the size of the secondary battery 1000 may increase due to the partition wall 250, and the sizes of the first electrode assembly part 210 and the second electrode assembly part 220 may decrease due to the partition wall 250. Accordingly, the capacity of the secondary battery 1000 may decrease.

The first electrode assembly part 210 and the second electrode assembly part 220 may have set sizes. The sizes of the electrode assembly part 210 and 220 may be defined by the size of the base material of the electrode assembly parts. In one or more embodiments, the first electrode assembly part 210 may have a first size, and the second electrode assembly part 220 may have a second size. The first size may be the area of the electrode of the first electrode assembly part 210. The second size may be the area of the electrode of the second electrode assembly part 220.

The first size and the second size may be the same (or substantially the same), or the first size and the second size may be different. The first size and the second size may be formed in various sizes to achieve a desired voltage of the secondary battery 1000.

The first electrode assembly part 210 and the second electrode assembly part 220 may have a set voltage. The first electrode assembly part 210 may have a first voltage and the second electrode assembly part 220 may have a second voltage. The first voltage and the second voltage may be the same (or substantially the same), or the first voltage and the second voltage may be different. The total voltage of the secondary battery may be determined by the first voltage and the second voltage. In one or more embodiments, the first electrode assembly part 210 and the second electrode assembly part 220 may be electrically connected. For example, the first electrode assembly part 210 and the second electrode assembly part 220 may be connected in series. Accordingly, the voltage of the secondary battery 1000 (e. g. the electrode assembly 200 thereof) may be a sum of the first voltage and the second voltage.

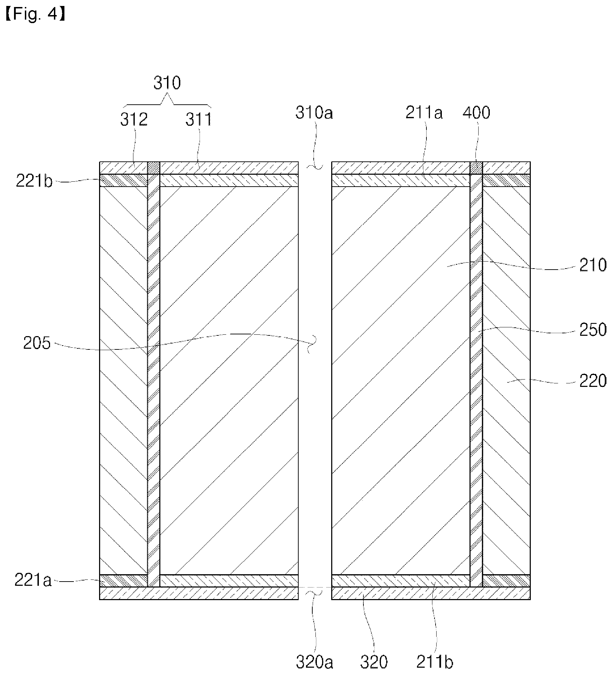

Referring to FIG. 4, the first conductive plate 310 and the second conductive plate 320 may be on the electrode assembly 200. In one or more embodiments, the first conductive plate 310 may be on the upper portion of the electrode assembly 200, and the second conductive plate 320 may be on the lower portion of the electrode assembly 200.

The first conductive plate 310 may be connected to the electrode assembly 200. In one or more embodiments, the first conductive plate 310 may be electrically connected to the first electrode assembly part 210 and the second electrode assembly part 220.

The first conductive plate 310 may include a metal. For example, the first conductive plate 310 may include aluminum (Al).

The first conductive plate 310 may include an insulating member 400. In one or more embodiments, the first conductive plate 310 may include a hole. The hole may be formed in a closed loop (annular) shape. The insulating member 400 may be inserted into the hole. Accordingly, the first conductive plate 310 may include a first conductive part 311 and a second conductive part 312 separated by the insulating member 400. The first conductive part 311 and the second conductive part 312 may be separated from each other by the insulating member 400. The first conductive part 311 and the second conductive part 312 may be insulated by the insulating member 400.

The first conductive part 311 may be connected to the first electrode assembly part 210. In one or more embodiments, the first conductive part 311 may be electrically connected to the 1-1 base material. In one or more embodiments, the first conductive part 311 may be electrically connected to the 1-1 uncoated portion 211a. In one or more embodiments, the first conductive part 311 and the 1-1 uncoated portion 211a may be coupled by welding. Therefore, the first conductive part 311 may be electrically connected to the positive electrode of the first electrode assembly part 210.

The second conductive part 312 may be connected to the second electrode assembly part 220. In one or more embodiments, the second conductive part 312 may be electrically connected to the 2-2 base material. In one or more embodiments, the second conductive part 312 may be electrically connected to the 2-2 uncoated portion 221b. In one or more embodiments, the second conductive part 312 and the 2-2 uncoated portion 221b may be coupled by welding. Accordingly, the second conductive part 312 may be electrically connected to the negative electrode of the second electrode assembly part 220.

The first conductive plate 310 may be connected to a terminal and the case 100. That is, the first conductive plate 310 may be a current collecting plate. The connection of the first conductive plate 310 and other members will be described in detail below.

The first conductive plate 310 may include at least one hole. For example, the first conductive plate 310 may include a first hole 310a. The first hole 310a may overlap the hollow portion 205 in the Y axis direction. Gas may be generated due to overcharging or malfunction of the electrode assembly. The gas may be discharged to the outside through the hollow portion 205 and the first hole 310a.

The second conductive plate 320 may be connected to the electrode assembly 200. In one or more embodiments, the second conductive plate 320 may be electrically connected to the first electrode assembly part 210 and the second electrode assembly part 220.

The second conductive plate 320 may include a metal. For example, the second conductive plate 320 may include aluminum (Al).

The second conductive plate 320 may include at least one hole. For example, the second conductive plate 320 may include a second hole 320a. The second hole 320a may overlap the hollow portion 205 and the first hole 310a in the Y axis direction. Gas may be generated due to overcharging or malfunction of the electrode assembly. The gas may be discharged to the outside through the hollow portion 205, the first hole 310a, and the second hole 320a.

The second conductive plate 320 may be connected to the first electrode assembly part 210. In one or more embodiments, the second conductive plate 320 may be electrically connected to the 2-1 base material. In one or more embodiments, the second conductive plate 320 may be electrically connected to the 2-1 uncoated portion 211b. For example, the second conductive plate 320 and the 2-1 uncoated portion 211b may be coupled by welding. Accordingly, the second conductive plate 320 may be electrically connected to the negative electrode of the first electrode assembly part 210.

The second conductive plate 320 may be connected to the second electrode assembly part 220. In one or more embodiments, the second conductive plate 320 may be electrically connected to the 1-2 base material. In one or more embodiments, the second conductive plate 320 may be electrically connected to the 1-2 uncoated portion 221a. For example, the second conductive plate 320 and the 1-2 uncoated portion 221a may be coupled by welding. Accordingly, the second conductive plate 320 may be electrically connected to the positive electrode of the second electrode assembly part 220.

The 2-1 uncoated portion 211b and the 1-2 uncoated portion 221a may be connected by the second conductive plate 320. In one or more embodiments, the 2-1 uncoated portion 211b and the 1-2 uncoated portion 221a may be connected in series by the second conductive plate 320.

In addition, the positive electrode of the electrode assembly 200 may be the first electrode assembly part 210, and the negative electrode of the electrode assembly 200 may be the second electrode assembly part 220.

The secondary battery according to the first embodiment includes the electrode assembly. The electrode assembly includes the first electrode assembly part and the second electrode assembly part. The electrode assembly also includes the partition wall. The partition wall is between the first electrode assembly part and the second electrode assembly part.

The first electrode assembly 210 part allows lithium ions to move between the positive and negative electrodes, and the second electrode assembly part 220 part allows lithium ions to move between the positive and negative electrodes. However, lithium ions do not move between the first electrode assembly part 210 and the second electrode assembly part 220 due to the partition wall 250. Accordingly, the electrode assembly includes a plurality of electrode assembly parts having individual voltages. In one or more embodiments, the electrode assembly includes the first electrode assembly part 210 having a first voltage and the second electrode assembly part 220 having a second voltage.

The first electrode assembly part 210 and the second electrode assembly part 220 are electrically connected. In one or more embodiments, the first electrode assembly part 210 and the second electrode assembly part 220 are connected in series. Therefore, the electrode assembly has a third voltage which is a sum of the first voltage and the second voltage.

Therefore, the voltage of the secondary battery according to the first embodiment may increase. Therefore, when using the same power, the current of the secondary battery may be reduced. Accordingly, the power loss of the secondary battery according to the first embodiment is reduced. That is, the power loss is proportional to the current of the secondary battery. Since the current of the secondary battery is reduced, the power loss of the secondary battery is also reduced.

Since the current of the secondary battery is reduced, the internal heat generation of the secondary battery is reduced. Accordingly, the internal temperature of the secondary battery may be prevented (or at least mitigated) from increasing. Accordingly, the performance and safety of the secondary battery may be improved.

The secondary battery according to the first embodiment may achieve a high voltage with one secondary battery. Conventionally, in order to realize a high voltage, a plurality of secondary batteries are connected in series. However, the secondary battery according to the first embodiment achieves a high voltage with one secondary battery. Therefore, the size of the battery module or battery pack may be reduced.

The secondary battery according to the first embodiment may be utilized easily. Conventionally, when using stored energy, the current applied from the secondary battery was converted using a transformer. However, since the secondary battery according to the first embodiment may design the voltage according to the device used, a separate transformer is not required.

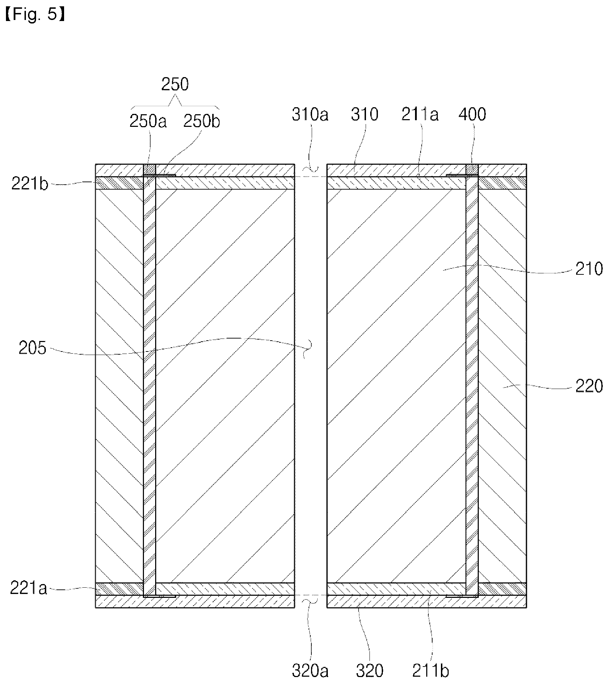

Referring to FIGS. 5 to 7, the electrode assembly of the secondary battery according to the first embodiment may be formed in various shapes.

Referring to FIG. 5, the partition wall 250 may be on at least one of the upper and lower surfaces of the first electrode assembly part 210.

The partition wall 250 may include a first region 250a and a second region 250b. The first region 250a may be between the first electrode assembly part 210 and the second electrode assembly part 220. The second region 250b may be bent at an upper and/or a lower end of the first region 250a. In one or more embodiments, the second region 250b may be bent at at least one end of the first region 250a.

The second region 250b may be on the 1-1 uncoated portion 211a. The second region 250b may be on a portion of the 1-1 uncoated portion 211a. For example, the second region 250b may be on an area of approximately 5% or less, approximately 3% or less, or approximately 1% or less of the 1-1 uncoated portion 211a.

In one or more embodiments, the second region 250b may be on the 2-1 uncoated portion 211b. The second region 250b may be on a portion of the 2-1 uncoated portion 211b. For example, the second region 250b may be disposed on an area of approximately 5% or less, approximately 3% or less, or approximately 1% or less of the 2-1 uncoated portion 211b.

In one or more embodiments, the second region 250b may be on both the 1-1 uncoated portion 211a and the 2-1 uncoated portion 211b. The second region 250b may be on at least a portion of the 1-1 uncoated portion 211a and the 2-1 uncoated portion 211b.

The first region 250a and the second region 250b of the partition wall 250 may include the same material. In one or more embodiments, the first region 250a and the second region 250b may be integral (e.g., monolithic).

The first region 250a may be configured to block lithium ion exchange between the first electrode assembly part 210 and the second electrode assembly part 220.

The second region 250b may increase the coupling strength of the partition wall 250. In one or more embodiments, the partition wall 250 may be prevented or at least mitigated from being separated from the electrode assembly by the second region 250b. The shape of the first electrode assembly part 210 may be maintained by the second region 250b. In one or more embodiments, the second region 250b may fix the first electrode assembly part 210 at the lower part and/or upper part of the first electrode assembly part 210. Accordingly, the shape of the first electrode assembly part 210 may be prevented, reduced, or at least mitigated from changing due to stress.

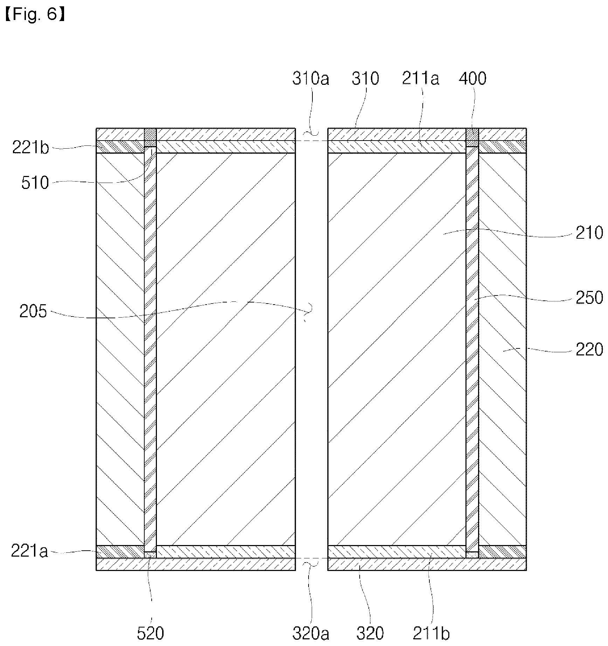

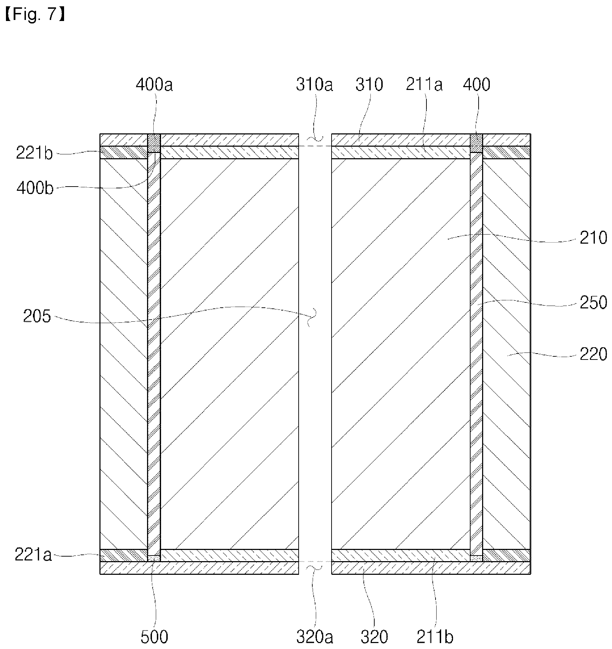

Referring to FIGS. 6 and 7, the secondary battery may include a blocking member.

Referring to FIG. 6, the blocking member may include a first blocking member 510 and a second blocking member 520.

The first blocking member 510 may be on the upper portion of the electrode assembly 200. The first blocking member 510 may be between the partition wall 250 and the insulating member 400. The first blocking member 510 may be in contact with the partition wall 250 and the insulating member 400. The first blocking member 510 may be between the 1-1 uncoated portion 211a and the 2-2 uncoated portion 221b. The first blocking member 510 may be in contact with at least one of the 1-1 uncoated portion 211a and the 2-2 uncoated portion 221b.

The first blocking member 510 may be formed in a closed loop (annular) shape corresponding to the shape in which the partition wall 250 is provided.

The second blocking member 520 may be at the lower portion of the electrode assembly 200. The second blocking member 520 may be between the partition wall 250 and the second conductive plate 320. The second blocking member 520 may be in contact with the partition wall 250 and the second conductive plate 320. The second blocking member 520 may be between the 2-1 uncoated portion 211b and the 1-2 uncoated portion 221a. The second blocking member 520 may be in contact with at least one of the 2-1 uncoated portion 211b and the 1-2 uncoated portion 221a.

The second blocking member 520 may be formed in a closed loop (annular) shape corresponding to the shape in which the partition wall 250 is provided.

The blocking member may include a resin material. The blocking member may include a material identical to or similar to the partition wall 250.

The partition wall 250 is formed after the first electrode assembly part 210 is formed. When the partition wall 250 is formed, the partition wall 250 may not cover the entire outer surface of the first electrode assembly part 210 due to a manufacturing error. Accordingly, the first electrode assembly part 210 may include a region in which the outer surface is partially exposed. Accordingly, an electrolyte may be provided in this region, and the first electrode assembly part 210 and the second electrode assembly part 220 may exchange lithium ions through this region.

Therefore, the secondary battery includes the blocking member to prevent or at least mitigate this exchange of lithium ions. The blocking member is provided in the exposed region. Accordingly, even if the exposed region is formed on the outer surface of the first electrode assembly part 210, movement of lithium ions between the first electrode assembly part 210 and the second electrode assembly part 220 may be blocked by the blocking member.

Referring to FIG. 7, the secondary battery may include one blocking member 500. For example, the blocking member 500 may be at the lower portion of the electrode assembly 200. The blocking member 500 may be between the partition wall 250 and the second conductive plate 320. The blocking member 500 may be in contact with the partition wall 250 and the second conductive plate 320. The blocking member 500 may be between the 2-1 uncoated portion 211b and the 1-2 uncoated portion 221a. The blocking member 500 may contact with at least one of the 2-1 uncoated portion 211b and the 1-2 uncoated portion 221a.

The blocking member 500 may be formed in a closed loop (annular) shape corresponding to the shape in which the partition wall 250 is provided.

The insulating member 400 may include a first region 400a and a second region 400b. The first region 400a and the second region 400b may include the same material. In one or more embodiments, the first region 400a and the second region 400b may be integral (e.g., monolithic).

The first region 400a may be in the hole of the first conductive plate 310. The second region 400b may be between the first region 400a and the partition wall 250. The second region 400b may be between the 1-1 uncoated portion 211a and the 2-2 uncoated portion 221b.

In one or more embodiments, the first blocking member 510 described above may be replaced by the second region 400a. Because the process of providing a separate first blocking member 510 is omitted, manufacturing process efficiency may be improved. Additionally, in general, when other members come into contact, a gap may be formed in the contact area. Therefore, the adhesive strength of the members may be reduced. Since the separate first blocking member 510 is omitted, the contact area between other members may be reduced. Accordingly, the movement of lithium ions by the electrolyte disposed in the gap may be prevented or reduced (mitigated).

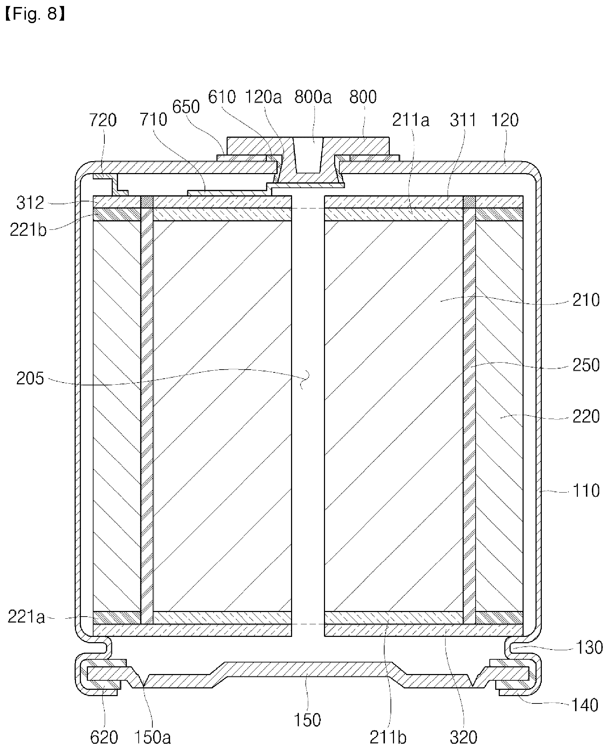

Hereinafter, with reference to FIGS. 1 and 8, a secondary battery including an electrode assembly according to the first embodiment will be described.

Referring to FIGS. 1 and 8, the electrode assembly 200 is accommodated inside the case 100.

The case 100 may include a side wall portion 110, a rivet plate 120, and a finishing plate 150.

The side wall portion 110 and the rivet plate 120 may be connected. For example, the side wall portion 110 and the rivet plate 120 may be integral (e.g., monolithic). In one or more embodiments, the side wall portion 110 and the rivet plate 120 may be coupled by welding.

The side wall portion 110 may form the shape of the case 100. For example, the side wall portion 110 may be formed in a circular shape. Accordingly, the case 100 may be formed in a cylindrical shape.

The side wall portion 110 may include a beading portion 130 and a crimping portion 140. The beading portion 130 may protrude toward the inside of the case 100 (e. g., radially inward). That is, the outer surface of the side wall portion 110 where the beading portion 130 is formed may be concave. The crimping portion 140 may be bent toward the inside of the case 100 (e. g., radially inward) below the beading portion 130.

The beading portion 130 may prevent or at least mitigate the electrode assembly 200 from moving inside the case 100. The beading portion 130 may be configured to enable the seating of a second insulating gasket 620 and the finishing plate 150. The crimping portion 140 may firmly fix the finishing plate 150 by pressing the edge of the finishing plate 150 through the second insulating gasket 620.

The rivet plate 120 may include a terminal hole 120a. A terminal 800 may be inserted through the terminal hole 120a. A first insulating gasket 610 and an insulating portion 650 may be between the terminal 800 and the rivet plate 120. For example, the first insulating gasket 610 may be between the terminal 800 and the inner surface of the terminal hole 120a. The insulating portion 650 may be between the terminal 800 and the upper surface of the rivet plate 120.

The terminal 800 may be insulated from the rivet plate 120 by the first insulating gasket 610 and the insulating portion 650. Therefore, the terminal 800 is not electrically connected to the case 100.

The terminal 800 may be riveted to the terminal hole 120a.

A plurality of lead tabs may be between the rivet plate 120 and the electrode assembly 200. For example, a first lead tab 710 may be between the rivet plate 120 and the first electrode assembly part 210. In addition, a second lead tab 720 may be between the rivet plate 120 and the second electrode assembly part 220.

The first lead tab 710 may be in contact with the first conductive part 311 and the terminal 800. Accordingly, the first electrode assembly part 210 and the terminal 800 may be electrically connected by the first lead tab 710. Accordingly, the terminal 800 may be a positive terminal.

The second lead tab 720 may be in contact with the second conductive part 312 and the rivet plate 120. Accordingly, the second electrode assembly part 220 and the rivet plate 120 may be electrically connected by the second lead tab 720. Accordingly, the case 100 may be a negative terminal.

The terminal 800 may include a groove 800a. A laser beam may be easily transmitted to the welding surface of the terminal 800 and the first lead tab 710 by the groove 800a.

The finishing plate 150 may be connected to the side wall portion 110. For example, the finishing plate 150 and the side wall portion 110 may be coupled by welding.

The finishing plate 150 may include at least one notch 150a. The notch 150a may be a groove in the finishing plate. Therefore, the thickness of the region where the notch 150a is formed may be thinner than the thickness of other regions of the finishing plate 150. When the internal pressure of the secondary battery becomes higher than a reference pressure, the finishing plate 150 may be broken by the notch 150a, and the gas inside may be discharged to the outside.

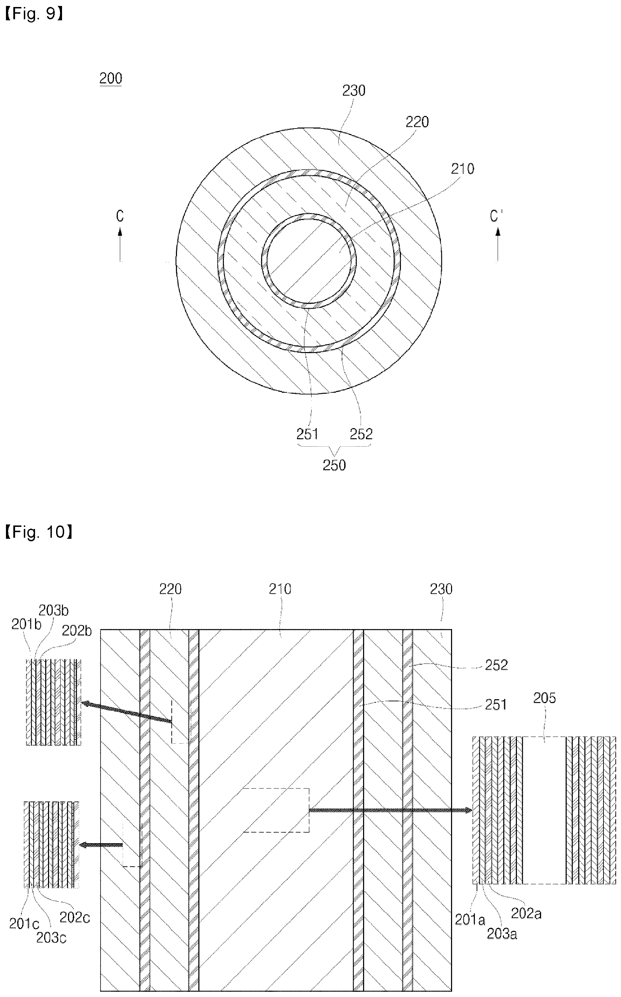

Hereinafter, a secondary battery according to a second embodiment will be described with reference to FIGS. 9 to 13. Commonalities with the first embodiment described above will be omitted. In addition, the same drawing reference numerals are given to the same configurations as those of the first embodiment.

Referring to FIGS. 9 to 13, the secondary battery according to the second embodiment may include the electrode assembly. The electrode assembly 200 may include a plurality of electrode assembly parts. For example, the electrode assembly 200 may include at least three electrode assembly parts. For example, the electrode assembly 200 may include a first electrode assembly part 210, a second electrode assembly part 220, and a third electrode assembly part 230. The first electrode assembly part 210, the second electrode assembly part 220, and the third electrode assembly part 230 may be concentric or substantially concentric.

The first electrode assembly part 210 may be wound in a jelly-roll shape. In one or more embodiments, the first electrode assembly part 210 may be wound in a state where the first separator 203a is between the 1-1 electrode 201a and the 2-1 electrode 202a.

In one or more embodiments, the first electrode assembly part 210 may include a hollow portion 205. The hollow portion 205 can be formed at the center (or substantially the center) of the winding of the first electrode assembly part 210.

The second electrode assembly part 220 may include the 1-2 electrode 201b, the 2-2 electrode 202b, and the second separator 203b.

The second electrode assembly part 220 may be wound in a jelly-roll shape. In one or more embodiments, the second electrode assembly part 220 may be wound in a state where the second separator 203b is between the 1-2 electrode 201b and the 2-2 electrode 202b. The second electrode assembly part 220 may be wound around the first electrode assembly part 210 with the first electrode assembly part 210 as an axis. Accordingly, the second electrode assembly part 220 does not include a separate hollow portion.

The third electrode assembly part 230 may include the 1-3 electrode 201c, the 2-3 electrode 202c, and the third separator 203c.

The third electrode assembly part 230 may be wound in a jelly-roll shape. In one or more embodiments, the third electrode assembly 230 may be wound in a state where the third separator 203c is between the 1-3 electrode 201c and the 2-3 electrode 202c. The third electrode assembly part 230 may be wound around the second electrode assembly part 220 with the second electrode assembly part 220 as an axis. Accordingly, the third electrode assembly part 230 does not include a separate hollow portion.

The 1-3 electrode 201c may include a 1-3 base material (base material of the positive electrode) and a 1-3 active material layer (active material of the positive electrode). The 1-3 active material layer may be on the 1-3 base material. For example, the 1-3 active material layer may be on one surface and the other surface (i.e., an opposite surface) of the 1-3 base material.

The 1-3 base material may include a 1-3 uncoated portion (uncoated portion of the positive electrode) 231a. The 1-1 active material layer is not provided on the 1-3 uncoated portion 231a. That is, the 1-3 uncoated portion 231a may be defined as an area where the 1-3 active material layer is not provided. The 1-3 uncoated portion 231a may be on the upper portion of the third electrode assembly part 230. In one or more embodiments, the 1-3 uncoated portion 231a may be on the lower portion of the first conductive plate 310.

The 1-1 electrode 201a, the 1-2 electrode 201b, and the 1-3 electrode 201c may include the same material. For example, the 1-1 base material, the 1-2 base material, and the 1-3 base material may include aluminum. In one or more embodiments, the 1-1 active material layer, the 1-2 active material layer, and the 1-3 active material layer may include a transition metal oxide.

The 2-3 electrode 202c may include a 2-3 base material (base material of the negative electrode) and a 2-3 active material layer (active material of the negative electrode). The 2-3 active material layer may be on the 2-3 base material. For example, the 2-3 active material layer may be on one surface and the other surface (i.e., an opposite surface) of the 2-3 base material.

The 2-3 base material may include a 2-3 uncoated portion (uncoated portion of the negative electrode) 231b. The 2-3 active material layer is not provided on the 2-3 uncoated portion 231b. That is, the 2-3 uncoated portion 231b may be defined as an area where the 2-3 active material layer is not provided. The 2-3 uncoated portion 231b may be at the lower portion of the third electrode assembly part 230. In one or more embodiments, the 2-3 uncoated portion 231b may be at the upper portion of the second conductive plate 320.

The 2-1 electrode 202a, the 2-2 electrode 202b, and the 2-3 202c electrode may include the same material. For example, the 2-1 base material, the 2-2 base material, and the 2-3 base material may include copper or nickel. In one or more embodiments, the 2-1 active material layer, the 2-2 active material layer, and the 2-3 active material layer may include graphite.

The third separator 203c may be between the 1-3 electrode 201c and the 2-3 electrode 202c.

The secondary battery may include a partition wall. The partition wall may include a plurality of partition walls. For example, the partition wall may include a first partition wall 251 and a second partition wall 252.

The first partition wall 251 may be between the first electrode assembly part 210 and the second electrode assembly part 220. The first electrode assembly part 210 and the second electrode assembly part 220 may be separated from each other by the first partition wall 251. In one or more embodiments, the first electrode assembly part 210 and the second electrode assembly part 220 do not contact each other due to the first partition wall 251.

The second partition wall 252 may be between the second electrode assembly part 220 and the third electrode assembly part 230. The second electrode assembly part 220 and the third electrode assembly part 230 may be separated by the second partition wall 252. In one or more embodiments, the second electrode assembly part 220 and the third electrode assembly part 230 do not contact each other due to the second partition wall 252.

Therefore, lithium ion exchange between the first electrode assembly part 210 and the second electrode assembly part 220 may be blocked (or at least mitigated) by the first partition wall 251. Additionally, lithium ion exchange between the second electrode assembly part 220 and the third electrode assembly part 230 may be blocked (or at least mitigated) by the second partition wall 252.

Therefore, the first electrode assembly part 210, the second electrode assembly part 220, and the third electrode assembly part 230 may be electrically separated while each having an individual voltage.

Therefore, the total voltage of the secondary battery may be determined by the voltages of the first electrode assembly part 210, the second electrode assembly part 220, and the third electrode assembly part 230. For example, the third electrode assembly part 230 may have a third voltage. For example, the first voltage, the second voltage, and the third voltage may be same or different. For example, the first electrode assembly part 210, the second electrode assembly part 220, and the third electrode assembly part 230 may be electrically connected. For example, the first electrode assembly part 210, the second electrode assembly part 220, and the third electrode assembly part 230 may be connected in series. Accordingly, the voltage of the secondary battery (e. g., the electrode assembly thereof) may be a sum of the voltages of the first electrode assembly part 210, the second electrode assembly part 220, and the third electrode assembly part 230.

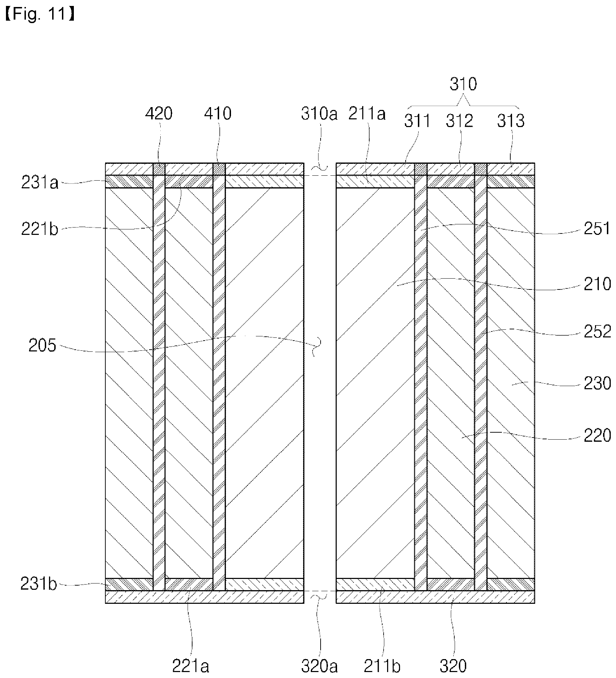

Referring to FIG. 11, the first conductive plate 310 may include a plurality of insulating members. For example, the insulating member may include a first insulating member 410 and a second insulating member 420. Accordingly, the first conductive plate 310 may include a first conductive part 311, a second conductive part 312, and a third conductive part 313. The first conductive part 311 and the second conductive part 312 may be separated from each other by the first insulating member 410. The first conductive part 311 and the second conductive part 312 may be insulated from each other by the first insulating member 410. The second conductive part 312 and the third conductive part 313 may be separated from each other by the second insulating member 420. The second conductive part 312 and the third conductive part 313 may be insulated from each other by the second insulating member 420.

The first conductive part 311 may be connected to the first electrode assembly part 210. The second conductive part 312 may be connected to the second electrode assembly part 220.

The third conductive part 313 may be connected to the third electrode assembly part 230. In one or more embodiments, the third conductive part 313 may be electrically connected to the 1-3 base material. In one or more embodiments, the third conductive part 313 may be electrically connected to the 1-3 uncoated portion (231a). For example, the third conductive part 313 and the 1-3 uncoated portion 231a may be coupled by welding. Accordingly, the third conductive part 313 may be electrically connected to the positive electrode of the third electrode assembly part 230.

The second conductive plate 320 may be connected to the electrode assembly 200. In one or more embodiments, the second conductive plate 320 may be electrically connected to the first electrode assembly part 210, the second electrode assembly part 220, and the third electrode assembly part 230.

The second conductive plate 320 may be connected to the third electrode assembly part 230. In one or more embodiments, the second conductive plate 320 may be electrically connected to the 2-3 base material. In one or more embodiments, the second conductive plate 320 may be electrically connected to the 2-3 uncoated portion 231b. For example, the second conductive plate 320 and the 2-3 uncoated portion 231b may be coupled by welding. Accordingly, the second conductive plate 320 may be electrically connected to the negative electrode of the third electrode assembly part 230.

The 2-1 uncoated portion 211b, the 1-2 uncoated portion 221a, and the 2-3 uncoated portion 231b may be connected by the second conductive plate 320. In one or more embodiments, the 2-1 uncoated portion 211b, the 1-2 uncoated portion 221a, and the 2-3 uncoated portion 231b may be connected in series by the second conductive plate 320.

Accordingly, the voltage of the electrode assembly 200 may be a sum of the voltages of the electrode assembly parts 210, 220, 230. In one or more embodiments, the positive electrode of the electrode assembly 200 may be the first electrode assembly part 210 and the third electrode assembly part 230. In one or more embodiments, the negative electrode of the electrode assembly 200 may be the second electrode assembly part 220.

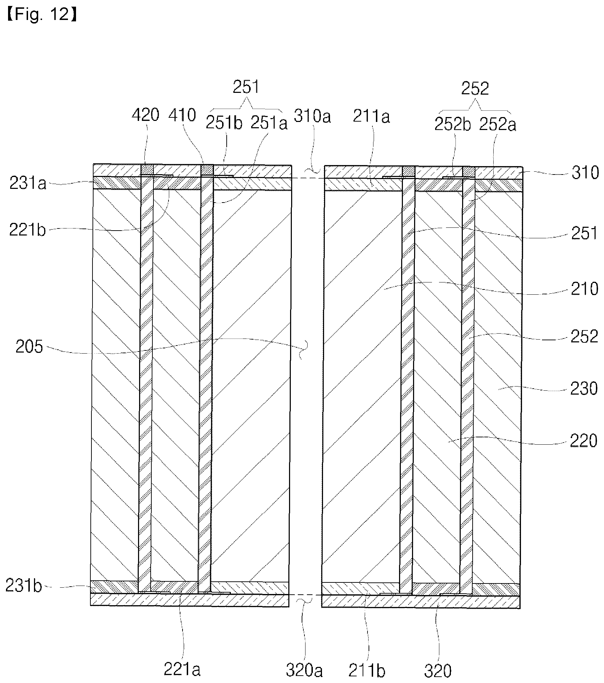

Referring to FIG. 12, the partition wall may be on at least one of the upper and lower surfaces of the first electrode assembly part 210.

For example, the first partition wall 251 may include a 1-1 region 251a and a 1-2 region 251b, and the second partition wall 252 may include a 2-1 region 252a and a 2-2 region 252b.

The 1-1 region 251a and the 2-1 region 252a may be between the respective electrode assembly parts 210, 220, 230. The 1-2 region 251b and the 2-2 region 252b may be partially on the upper and lower portions of the electrode assembly parts 210, 220, and/or 230.

Accordingly, the lithium ion exchange of the electrode assembly parts may be blocked by the 1-1 region 251a and the 2-1 region 252a. Additionally, the fixing force of the partition walls 251, 252 may be improved by the 1-2 region 251b and the 2-2 region 252b. Accordingly, the partition walls 251, 252 may be prevented or at least mitigated from being separated from the electrode assembly.

Although not shown in the drawing, the blocking member 510 and/or 520 described above may also be applied to the secondary battery according to the second embodiment.

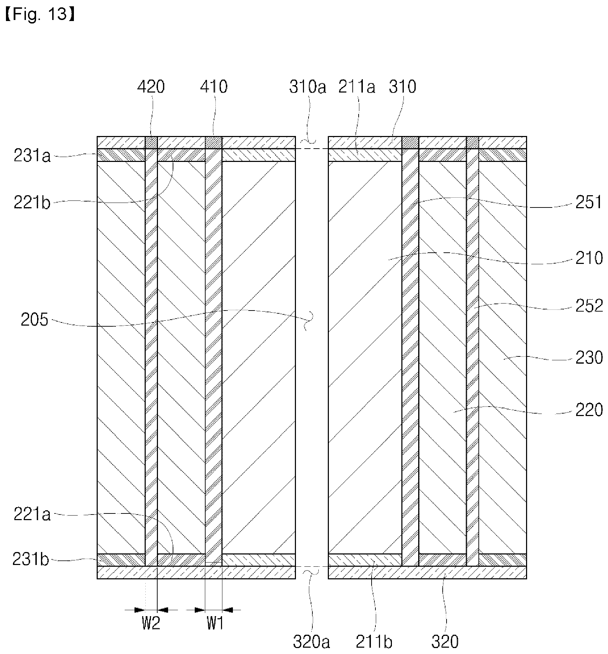

Referring to FIG. 13, the first partition wall 251 and the second partition wall 252 may have different sizes. For example, the widths of the first partition wall 251 and the second partition wall 252 may be different. For example, the first partition wall 251 may have a first width W1, and the second partition wall 252 may have a second width W2 different than the first width W1. The first width W1 may be larger than the second width W2.

The first partition wall 251 is adjacent to the winding center of the electrode assembly. By increasing the width of the first partition wall 251, the first electrode assembly part 210 may be fixed. Accordingly, when the first electrode assembly part 210 swells, the change in the shape of the first electrode assembly part 210 may be minimized or at least reduced. Accordingly, the first electrode assembly part 210 may be prevented or reduced from collapsing in the hollow portion of the electrode assembly.

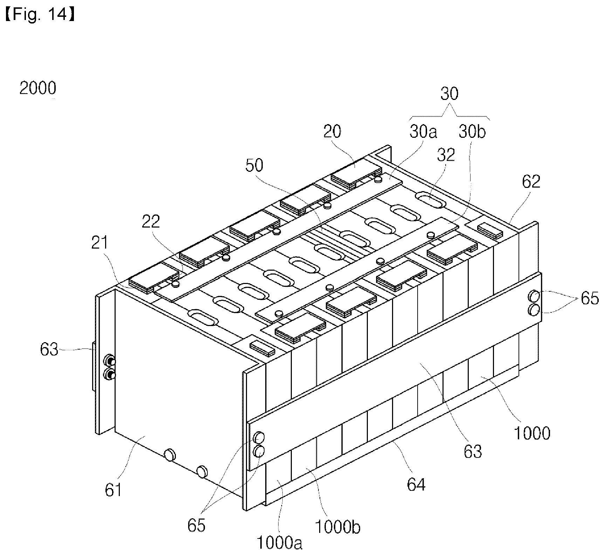

Hereinafter, a battery module including secondary batteries according to embodiments will be described with reference to FIG. 14.

Referring to FIG. 14, the battery module 2000 according to one or more example embodiments of the present disclosure includes electrode units 11 and 12, a plurality of secondary battery 1000 arranged in one direction, a connection tab 20 connecting a secondary battery 1000a to an adjacent secondary battery 1000b, and a protection circuit module 30 having one end connected to the connection tab 20. The protection circuit module 30 may include a battery management system (BMS). Further, the connection tab 20 may include a body portion in contact with the electrode units between the adjacent secondary battery 1000a and 1000b and an extension portion extending from the body portion and connected to the protection circuit module 30. The connection tab 20 may be, for example, a bus bar.

Each secondary battery 1000 may include a battery case, an electrode assembly received (or accommodated) in the battery case, and an electrolyte. The electrode assembly and the electrolyte react electrochemically to store and release (e.g., generate) energy. Terminal parts 21 and 22 electrically connected to the connection tab 20 and a vent 32 as a discharge passage for gas generated inside the battery case may be provided on one side of (e.g., an upper side of) the secondary battery 1000. The terminal parts 21 and 22 of the secondary battery 1000 may be a positive electrode terminal and a negative electrode terminal having different polarities from each other, and the terminal parts 21 and 22 of the adjacent secondary battery 1000a and 1000b may be electrically connected to each other in series or parallel by the connection tab 20, to be described in more detail below. Although a serial connection has been described as an example, the connection structure is not limited thereto, and various connection structures may be employed as desired or necessary. In addition, the number and arrangement of secondary battery is not limited to the structure shown in FIG. 14 and may be changed as desired or necessary.

The plurality of secondary batteries 1000 may be arranged in (e.g., may be stacked in) one direction so that the wide surfaces of the secondary batteries 1000 face each other, and the plurality of secondary batteries 1000 may be fixed by the housings 61, 62, 63, and 64. The housings 61, 62, 63, and 64 may include a pair of end plates 61 and 62 facing the wide surfaces of the secondary battery batteries 1000 and a side plate 63 and a bottom plate 64 connecting the pair of end plates 61 and 62 to each other. The side plate 63 may support side surfaces of the secondary batteries 1000, and the bottom plate 64 may support bottom surfaces of the secondary batteries 1000. In addition, the pair of end plates 61 and 62, the side plate 63 and the bottom plate 64 may be connected by bolts 65 and/or any other suitable fastening members and methods known to those of ordinary skill in the art.

The protection circuit module 30 may have electronic components and protection circuits mounted thereon and may be electrically connected to connection tabs 20, to be described in more detail later. The protection circuit module 30 includes a first protection circuit module 30a and a second protection circuit module 30b extending along the direction in which the plurality of secondary batteries 1000 are arranged in different locations. The first protection circuit module 30a and the second protection circuit module 30b may be spaced from each other at a suitable or desired interval (e.g., a predetermined interval) and arranged parallel to each other to be electrically connected to adjacent connection tabs 20, respectively. For example, the first protection circuit module 30a extends on one side of the upper portion of the plurality of secondary batteries 1000 along the direction in which the plurality of secondary batteries 1000 are arranged, and the second protection circuit module 30b extends on the other upper side of the plurality of secondary batteries 1000 along the direction in which the plurality of secondary batteries 1000 are arranged. The second protection circuit module 30b may be spaced from the first protection circuit module 30a at a suitable or desired interval (e. g., a predetermined interval) with the vents 32 interposed therebetween but may be disposed parallel to the first protection circuit module 30a. As such, the two protection circuit modules 30a and 30b are spaced from each other side-by-side along the direction in which the plurality of secondary batteries 1000 are arranged, thereby reducing or minimizing the area of the printed circuit board (PCB) constituting the protection circuit module 30. By separately configuring the protection circuit module 30 into two protection circuit modules 30a and 30b, unnecessary PCB area can be reduced or minimized. In addition, the first protection circuit module 30a and the second protection circuit module 30b may be connected to each other by a conductive connection member 50. One side of the conductive connection member 50 is connected to the first protection circuit module 30a, and the other side thereof is connected to the second protection circuit module 30b so that the two protection circuit modules 30a and 30b can be electrically connected with each other.

The connection may be performed by any one of soldering, resistance welding, laser welding, projection welding and/or any other suitable connection methods known to those of ordinary skill in the art.

In addition, the connection member 50 may be or include, for example, an electric wire. In addition, the connection member 50 may be made of or include a material having elasticity or flexibility. By the connecting member 50, it may be possible to check and manage whether the voltage, temperature, and/or current of the plurality of secondary battery 1000 are normal or within a desired range. For example, the information received by the first protection circuit module 30a from connection tabs adjacent to the first protection circuit module, such as voltage, current, and/or temperature, and the information received by the second protection circuit module 30b from connection tabs adjacent to the second protection circuit module 30a, such as voltage, current, and/or temperature, may be integrated and managed by the protection circuit module 30 through the connection member 50.

In addition, when a secondary battery 1000 swells, shocks may be absorbed by the elasticity or flexibility of the connection member 50, thereby hindering or preventing the first and second protection circuit modules 30a and 30b from being damaged.

In addition, the shape and structure of the connection member 50 is not limited to the shape and structure shown in FIG. 14.

As described above, because the protection circuit module 30 is provided as the first and second protection circuit modules 30a and 30b, the area of the PCB constituting the protection circuit module can be reduced or minimized, and the space inside the battery module can be secured, which improves work efficiency by facilitating a fastening work for connecting the connection tab 20 and the protection circuit module 30 and repair work when an abnormality is detected in the battery module.

The secondary battery and battery modules according to the previously described example embodiments may be used to manufacture the battery pack.

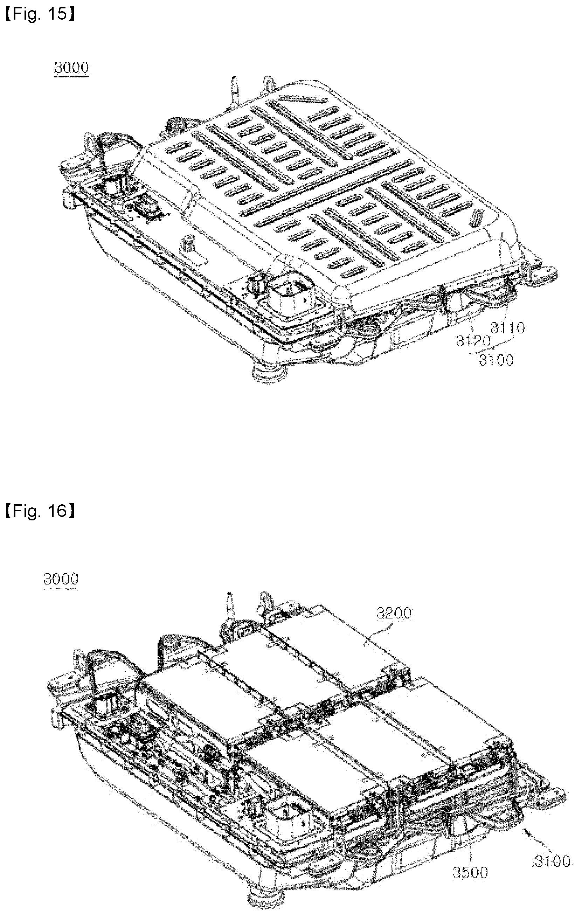

FIGS. 15 and 16 show a battery pack 3000 according to one or more example embodiments of the present disclosure. The battery pack 3000 may include a plurality of battery modules 3200 and a housing 3100 for accommodating the plurality of battery modules 3200. For example, the housing 3100 may include first and second housings 3110 and 3120 coupled in opposite directions through the plurality of battery modules 3200. The plurality of battery modules 3200 may be electrically connected to each other by using a bus bar, and the plurality of battery modules 3200 may be electrically connected to each other in a series/parallel or series-parallel mixed method, thereby obtaining desired (e.g., required) electrical output. In the drawing, for convenience of illustration, parts such as bus bars, cooling units, and external terminals for electrical connection of secondary battery are omitted. In one or more example embodiments, battery pack 3000 may be mounted in a vehicle. The vehicle may be or include, for example, an electric vehicle, a hybrid vehicle (a plug-in hybrid vehicle). A vehicle may include a four-wheeled vehicle or a two-wheeled vehicle.

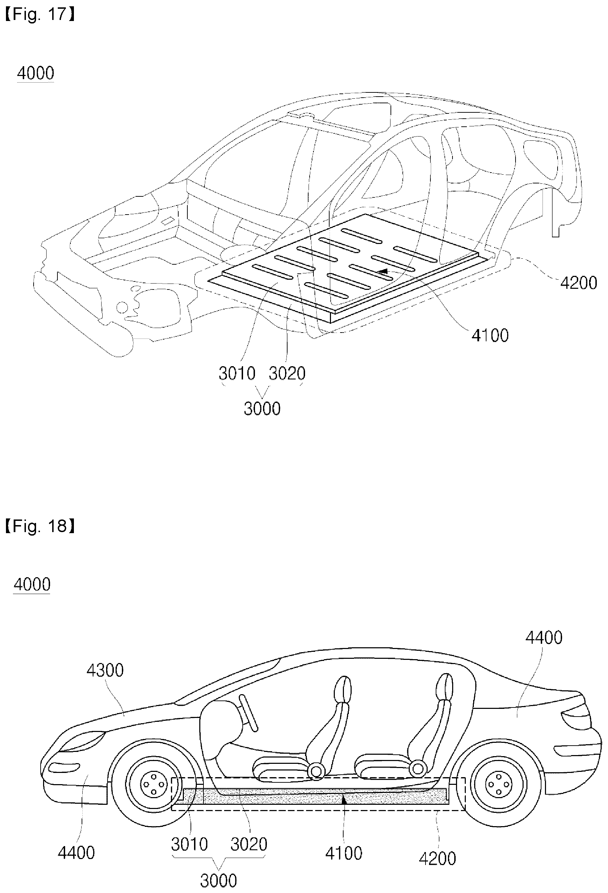

In FIG. 17, a battery pack 3000 may include a battery pack cover 3010, which is a part of a vehicle underbody 4100 and may correspond to the first housing, and a pack frame 3020, which is disposed under the vehicle underbody 4100 and may corresponding to the second housing. The battery pack cover 3010 and the pack frame 3020 may be, e.g., integrally formed with a vehicle floor 4200. The vehicle underbody 4100 separates the inside and outside of a vehicle, and the pack frame 3020 may be disposed outside the vehicle

In FIG. 18, a vehicle 4000 may be formed by combining additional parts, such as a hood 4300 in front of the vehicle 4000 and fenders 4400 respectively located in the front and rear of the vehicle 4000 to a vehicle body part. The vehicle 4000 may include the battery pack 3000 including the battery pack cover 3010 and the pack frame 3020, and the battery pack 3000 may be coupled to the vehicle body part.

The embodiments described above are merely some examples of how a secondary battery according to the present disclosure may be realized. However, the disclosure is not limited to those embodiments, and a person skilled in the art will understand that various modifications and alterations in form and detail can be made without departing from the technical concept defined by the following claims.

## Claims

1. A secondary battery (1000) comprising:
a case (100); and
an electrode assembly (200), a partition wall (250), and a conductive plate accommodated in the case (100),
wherein the electrode assembly (200) comprises a first electrode assembly part (210) and a second electrode assembly part (220),
wherein the partition wall (250) is between the first electrode assembly part (210) and the second electrode assembly part (220),
wherein the conductive plate comprises a first conductive plate (310) on the electrode assembly (200) and a second conductive plate (320) under the electrode assembly (200),
wherein the first conductive plate (310) comprises a first conductive part (311) and a second conductive part (312) insulated from the first conductive part (311) by an insulating member (400),
wherein the first conductive part (311) is electrically connected to the first electrode assembly part (210),
wherein the second conductive part (312) is electrically connected to the second electrode assembly part (220), and
wherein the second conductive plate (320) is electrically connected to the first electrode assembly part (210) and the second electrode assembly part (220).

2. The secondary battery (1000) as claimed in claim 1,
wherein the first electrode assembly part (210) comprises a 1-1 electrode (201a), a 2-1 electrode (202a), and a first separator (203a),
wherein the second electrode assembly part (220) comprises a 1-2 electrode (201b), a 2-2 electrode (202b), and a second separator (203b),
wherein the 1-1 electrode (201a) comprises a 1-1 uncoated portion (211a) where an active material layer is not provided,
wherein the 2-1 electrode (202a) comprises a 2-1 uncoated portion (211b) where an active material layer is not provided,
wherein the 1-2 electrode (201b) includes a 1-2 uncoated portion (221a) where an active material layer is not provided,
wherein the 2-2 electrode (202b) includes a 2-2 uncoated portion (221b) where an active material layer is not provided,
wherein the 1-1 electrode (201a) and the 1-2 electrode (201b) are positive electrodes, and
wherein the 2-1 electrode (202a) and the 2-2 electrode (202b) are negative electrodes.

3. The secondary battery (1000) as claimed in claim 2,
wherein the 1-1 uncoated portion (211a) is at an upper end of the first electrode assembly part (210),
wherein the 2-1 uncoated portion (211b) is at a lower end of the first electrode assembly part (210),
wherein the 1-2 uncoated portion (221a) is at a lower end of the second electrode assembly part (220), and
wherein the 2-2 uncoated portion (221b) is at an upper end of the second electrode assembly part (220).

4. The secondary battery (1000) as claimed in claim 3,
wherein the 1-1 uncoated portion (211a) and the 2-2 uncoated portion (221b) are electrically connected to the first conductive plate (310), and
wherein the 2-1 uncoated portion (211b) and the 1-2 uncoated portion (221a) are electrically connected to the second conductive plate (320).

5. The secondary battery (1000) as claimed in any one of claims 2 to 4, wherein the partition wall (250) comprises a different material than the first separator (203a) and the second separator (203b).

6. The secondary battery (1000) as claimed in any one of claims 1 to 5, wherein a thickness of the partition wall (250) is in a range from 20 µm to 100 µm.

7. The secondary battery (1000) as claimed in any one of claims 1 to 6, wherein the first electrode assembly part (210) and the second electrode assembly part (220) are connected in series.

8. The secondary battery (1000) as claimed in any one of claims 1 to 7,
wherein the first electrode assembly part (210) is configured to have a first voltage,
wherein the second electrode assembly part (220) is configured to have a second voltage,
wherein the first voltage and the second voltage are same or different, and
wherein preferably the electrode assembly (200) is configured to have a voltage corresponding to a sum of the first voltage and the second voltage.

9. The secondary battery (1000) as claimed in any one of claims 1 to 8,
wherein the partition wall (250) comprises a resin, and
wherein the partition wall (250) is configured to block movement of lithium ions.

10. The secondary battery (1000) as claimed in claim 4,
wherein the partition wall (250) comprises a first region (250a) and a second region (250b),
wherein the first region (250a) is between the first electrode assembly part (210) and the second electrode assembly part (220), and
wherein the second region (250b) is on a portion of at least one of the 1-1 uncoated portion (211a) and the 2-1 uncoated portion (211b).

11. The secondary battery (1000) as claimed in claim 4, further comprising:
a first blocking member (510) between the partition wall (250) and the insulating member (400); and
a second blocking member (520) between the partition wall (250) and the second conductive plate (320).

12. The secondary battery (1000) as claimed in claim 4, further comprising a blocking member between the partition wall (250) and the second conductive plate (320),
wherein the insulating member (400) comprises a first region (400a) and a second region (400b),
wherein the first region (400a) is in a hole of the first conductive plate (310), and wherein the second region (400b) is between the first region (400a) and the partition wall (250).

13. The secondary battery (1000) as claimed in claim 4, wherein the electrode assembly (200) further comprises a third electrode assembly part (230),
wherein the second electrode assembly part (220) is between the first electrode assembly part (210) and the third electrode assembly part (230),
wherein the third electrode assembly part (230) comprises a 1-3 electrode (201c), a 2-3 electrode (202c), and a third separator (203c),
wherein the 1-3 electrode (201c) comprises a 1-3 uncoated portion (231a) where an active material layer is not provided,
wherein the 2-3 electrode (202c) comprises a 2-3 uncoated portion (231b) where an active material layer is not provided,
wherein the 1-3 electrode (201c) is a positive electrode,
wherein the 2-3 electrode (202c) is a negative electrode,
wherein the 1-3 uncoated portion (231a) is at an upper end of the third electrode assembly part (230),
wherein the 2-3 uncoated portion (231b) is at a lower end of the third electrode assembly part (230),
wherein the 1-3 uncoated portion (231a) is electrically connected to the first conductive plate (310), and
wherein the 2-3 uncoated portion (231b) is electrically connected to the second conductive plate (320).

14. The secondary battery (1000) as claimed in claim 13, wherein the partition wall (250) comprises a first partition wall (251) between the first electrode assembly part (210) and the second electrode assembly part (220), and a second partition wall (252) between the second electrode assembly part (220) and the third electrode assembly part (230), and
wherein a width of the first partition wall (251) is different from a width of the second partition wall (252).

15. The secondary battery (1000) as claimed in claim 13, wherein the first electrode assembly part (210) is configured to have a first voltage,
wherein the second electrode assembly part (220) is configured to have a second voltage,
wherein the third electrode assembly part (230) is configured to have a third voltage, wherein the first voltage, the second voltage, and the third voltage are same or different, and
wherein the electrode assembly (200) is configured to have a voltage corresponding to a sum of the first voltage, the second voltage, and the third voltage.
